# EUROPÄISCHE PATENTSCHRIFT

(11) **EP 1 899 135 B1**
(45) Veröffentlichungstag und Bekanntmachung des Hinweises auf die Patenterteilung: **20.08.2008**
(21) Anmeldenummer: 06754255.5
(22) Anmeldetag: 11.06.2006
(51) Int. Cl.: B29C 45/77

(54) **VORRICHTUNG UND VERFAHREN ZUM DETEKTIEREN EINER KRAFT AN EINER SPRITZGIESSMASCHINE**
DEVICE AND METHOD FOR DETECTING A FORCE ON AN INJECTION MOULDING MACHINE
DISPOSITIF ET PROCEDE POUR DETECTER UNE FORCE AU NIVEAU D'UNE PRESSE D'INJECTION

(30) Priorität: 13.06.2005 DE 102005027264
(43) Veröffentlichungstag der Anmeldung: 19.03.2008
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2006/005548
(87) Internationale Veröffentlichungsnummer: WO 2006/133860

(56) Entgegenhaltungen:
- DE-A1- 10 135 516
- PATENT ABSTRACTS OF JAPAN Bd. 2003, Nr. 06, 3. Juni 2003 (2003-06-03) -& JP 2003 048238 A (AIDA ENG LTD), 18. Februar 2003 (2003-02-18)
- PATENT ABSTRACTS OF JAPAN Bd. 012, Nr. 206 (M-708), 14. Juni 1988 (1988-06-14) -& JP 63 009524 A (NIIGATA ENG CO LTD), 16. Januar 1988 (1988-01-16)
- PATENT ABSTRACTS OF JAPAN Bd. 018, Nr. 229 (M-1598), 26. April 1994 (1994-04-26) -& JP 06 023813 A (TOYO MACH & METAL CO LTD), 1. Februar 1994 (1994-02-01)

## Beschreibung

Die Erfindung betrifft eine Vorrichtung und ein Verfahren zum Detektieren eine Kraft wenigstens eines mechanischen Antriebs an einer Spritzgießmaschine zur Verarbeitung von Kunststoffen und anderer plastifizierbarer Massen wie pulverförmige und/oder keramische Massen nach den Oberbegriffen der Ansprüche 1 oder 7.

Eine derartige Vorrichtung und ein derartiges Verfahren sind z.B. aus PATENT ABSTRACTS OF JAPAN, Band 2003, Nr. 06, 3. Juni 2003 (2003-06-03) und JP 2003 048238 A in Form einer Druckmessdose bekannt, wobei zwischen zwei Bauteilen ein Hydraulikraum vorgesehen ist, dessen Druckveränderung zum Detektieren der Kraft an einer Spritzgießeinheit einer Spritzgießmaschine erfasst wird.

In Verbindung mit einer Spritzgießmaschine ist ferner aus PATENT ABSTRACTS OF JAPAN, Band 018, Nr. 229 (M-1598), 26. April 1994 (1994-04-26) und JP 06 023813 A an einem Servomotor ein Druckbegrenzungsventil bekannt, um eine Überlastsicherung zur Ableitung von Hydraulikmitteln in einen Hydraulikmittelbehälter bei Überschreiten eines vorgegebenen Drucks im Hydraulikraum bekannt.

Ähnliche Vorrichtungen sind aus PATENT ABSTRACTS OF JAPAN; Band 012, Nr. 206 (M-708), 14. Juni 1988 (1988-06-14) und JP 63 009524 A und der DE 101 35 516 A1 bekannt.

Die DE 203 08 114 U1 zeigt eine Ansteuervorrichtung zum Detektieren einer Kraft einer Spindel insbesondere einer Spritzgussmaschine eine Einspritzantriebseinrichtung für eine Einspritzeinheit, die eine Gewindespindel als ein Bauteil relativ zur Gewindespindelmutter als weiteres Bauteil dreht. An der Gewindespindelmutter wird eine Kraftdetektionskomponente befestigt, sodass die Einspritzkraft detektiert und mit einer vorgegebenen Einspritzkraft verglichen werden kann, um dadurch die Einspritzkraft zu regeln. Vorzugsweise ist dadurch der Kraftaufnehmer von der Spindelabstützung entkoppelt. Dadurch soll gegenüber vorbekannten Kraftmessdosen und Kraftaufnehmern die Einspritzkraft genauer bestimmt werden, da es sonst aufgrund der Anordnung des Kraftaufnehmers z.B. am Servomotor schwierig ist, die tatsächliche Kraft aufgrund zwischengeschalteter mechanischer Teile und der vorhandenen Reibung zu erfassen.

Aus der DE 103 37 551 A1 ist eine Druckmesseinrichtung für eine Spritzgießmaschine bekannt, bei der ein elastisch verformbares Kraftübertragungsglied eines Lastdetektors in den Kraftweg zwischen Hubantrieb und Plastifizierschnecke als integrales Bestandteil eines Getriebeelements des Hubantriebs eingefügt ist. Das Kraftübertragungsglied wird unter Last elastisch verformt, indem es axial gestaucht und im Durchmesser aufgeweitet wird. Die Längen- oder Dickenänderung wird zur Krafterfassung berührungslos gemessen.

Aus der EP 1 275 487 A1 ist eine derartige Druckmesseinrichtung bekannt, bei der ein Stützkörper vorgesehen ist, der den vom Sensor überwachten Maschinenteil entlastet, wenn der erfasste Schließ- oder Spritzdruck einen bestimmten, weniger als die Hälfte seines Maximalwerts betragenden Wert übersteigt, um eine Überlastung der Sensoren zu vermeiden.

Nach der EP 0 752 303 B1 ist ein Kraftaufnehmer mittels Bolzen an einer mit einer Gewindespindel verbundenen Gewindemutter und einer hinteren Platte befestigt, die von der Gewindespindel durchgriffen ist. Der damit auf Biegung beanspruchte Kraftaufnehmer kann verformungsabhängige Werte geben, die unmittelbar am Ende der Spindel und damit weitestgehend frei von weiteren Kräften erfasst werden. Die auftretende Relativbewegung im Bereich des Kraftaufnehmers beruht darauf, dass die in einer drehfest gelagerten Mutter laufende Spindel die Axialkraft der Spindel überträgt, der die Zugkraft der Bolzen entgegensteht, mit denen der Kraftaufnehmer an der hinteren Platte gehalten ist. Infolge der Deformation der Bolzen, die durch die Unterschiede und die Trägheit der Axialkraft und der Zugkraft verursacht werden, entspricht die gemessene Axialkraft nicht dem tatsächlichen Wert.

Aus der US 2004/0142057 A1 ist eine Messeinrichtung für den Forminnendruck einer Spritzgießmaschine bekannt. Die Größe des Formhohlraums ändert sich unter Druckänderung des im Raum befindlichem Mediums, wobei die Druckänderung ein Eingangssignal für eine Druck- oder Kraftregelung ist.

Ausgehend von diesem Stand der Technik liegt der vorliegenden Erfindung die Aufgabe zugrunde, eine Vorrichtung und ein Verfahren zum Detektieren einer Kraft an einer Spritzgießmaschine zu schaffen, die eine günstige alternative Krafterfassung und gleichzeitige Überlastsicherung ermöglichen.

Diese Aufgabe wird durch eine Vorrichtung und ein Verfahren mit den Merkmalen der Ansprüche 1 oder 7 gelöst.

Ein Hydraulikraum wird zwischen einander benachbarten oder aneinander angrenzenden Bauteilen vorgesehen, ohne dass eine zusätzliche Kraftmessdose oder ein Kraftaufnehmer vorgesehen werden muss. Der Druck im Hydraulikraum wird gemessen und dient als Eingangssignal für eine Druck- oder Kraftregelung. Damit ist die Krafterfassung von der Verformung sonstiger z.B. zur Befestigung der Kraftaufnehmer vorgesehener Bauteile frei, da der Hydraulikraum zwischen den Bauteilen selbst "integriert" ist. Gleichzeitig lässt sich die Auflösung des Hydraulikdrucks individuell bereits durch die Größe der bei der Relativbewegung beaufschlagten Flächen weitestgehend frei bestimmen. Das System kann auf diese Weise nicht nur zur Erfassung der Einspritzkraft sondern zur Erfassung verschiedenster Kräfte an einer Spritzgießmaschine sowohl formschließseitig als auch spritzgießseitig eingesetzt werden. Ebenso ist ein Einsatz in Verbindung mit verschiedensten mechanischen Antrieben möglich, so lange eine Bewegung in einer Bewegungsrichtung in Richtung der Relativbewegung der beiden Bauteile erfolgt. Damit kann das System z.B. auch bei Linearantrieben oder selbst zur Erfassung der Strecklage von Kniehebeln eingesetzt werden, insbesondere wenn die Erfassung z.B. in der Endstellung des Kniehebels erfolgt.

Gleichzeitig wird zusätzlich eine Überlastsicherung durch eine Druckbegrenzung des im Hydraulikraum vorgesehenen Hydraulikmediums gewährleistet. Bei mechanischen Antrieben besteht nämlich häufig die Gefahr, dass beim Auflaufen der bewegten Bauteile z.B. auf einen mechanischen Endanschlag sehr steile Kraftanstiege entstehen, die infolge der vorhandenen Massenträgheiten nicht ohne weiteres abgefangen werden können und dadurch teilweise zur Zerstörung des mechanischen Antriebssystems wie z.B. von Spindeln führen. Bei der erfindungsgemäßen Lösung wird das Hydraulikmedium bei Auftreten von äußeren Kräften zunächst den Druck weiter aufbauen, wobei dieser Druck über einen Druckaufnehmer zur Druck- und Kraftregelung verwendet wird. Bei Überschreiten eines maximal zulässigen Drucks kann zudem kurzfristig Hydraulikmedium aus dem Hydraulikraum in einen Hydraulikmittelbehälter abgeleitet werden, sodass sich die Bauteile infolge eines dort vorzugsweise vorhandenen Bewegungspufferraums mechanisch relativ zueinander bewegen können, um dadurch den mechanischen Antrieb zu schützen. Nach Eintreten dieses Überlastfalls - grundsätzlich auch bei jedem neuen Zyklus - kann nach einer weiteren Ausführungsform das Pumpensystem den Ausgangszustand wieder herstellen, dass heißt die Bauteile in den ursprünglich mechanischen Zustand zurückführen bzw. das System wieder auf den Ausgangszustand kalibrieren.

Als mechanischer Antrieb kann auch ein Kniehebelantrieb in Verbindung mit der begrenzenden Kraft eingesetzt werden. Dies erleichtert z. B. die maßlich genaue Festlegung der Strecklage auf das eingespannte Werkzeug, indem eine Kraftbegrenzung durch das abfließende Öl erreicht wird. Damit ist gleichzeitig eine geregelte Schließkraft ohne mechanische Verstellung möglich.

Weitere Vorteile ergeben sich aus den weiteren Unteransprüchen und der folgenden Beschreibung.

### Kurzbeschreibung der Figuren

Im Folgenden wird die Erfindung anhand der beigefügten Figuren näher erläutert. Es zeigen:
Fig. 1 eine Seitenansicht einer Spritzgießeinheit einer Spritzgießmaschine,
Fig. 2 einen horizontalen Schnitt in Höhe der Spritzachse s-s von Fig. 1 durch die Spritzgießeinheit,
Fig. 3 einen vergrößerten Ausschnitt aus Fig. 2 im Bereich der Krafterfassungseinrichtung D,
Fig.3a eine Darstellung gemäß Fig. 3 im Überlastfall,
Fig. 4 eine schematische Darstellung der der Krafterfassungseinrichtung D zugeordneten Hydraulikeinrichtung.

Bevor die Erfindung im Detail beschrieben wird, ist darauf hinzuweisen, dass die Erfindung nicht auf die jeweiligen Bauteile der Vorrichtung oder die jeweiligen Verfahrensschritte beschränkt ist, da diese Bauteile und Verfahren variieren können. Die hierfür verwendeten Begriffe sind lediglich dafür bestimmt, besondere Ausführungsformen zu beschreiben und werden nicht einschränkend verwendet. Wenn in der Beschreibung und in den Ansprüchen die Einzahlform oder unbestimmte Artikel verwendet werden, beziehen sich diese auch auf die Mehrzahl dieser Element, solange nicht der Gesamtzusammenhang eindeutig etwas anderes deutlich macht.

Die Figuren zeigen eine Vorrichtung zum Detektieren einer Kraft wenigstens eines mechanischen Antriebs A an einer Spritzgießeinheit S einer Spritzgießmaschine zur Verarbeitung von Kunststoffen und anderer plastifizierbarer Massen wie pulverförmige und/oder keramische Massen. Die Spritzgießeinheit S stellt lediglich ein Ausführungsbeispiel dar, da die Vorrichtung grundsätzlich an beliebiger Stelle an oder in Verbindung mit einer Spritzgießmaschine z.B. auch formschließseitig eingesetzt werden kann. Ebenso kann das im Folgenden beschriebene Verfahren grundsätzlich an verschiedensten Bereichen an einer Spritzgießmaschine oder in deren Peripherie betrieben werden.

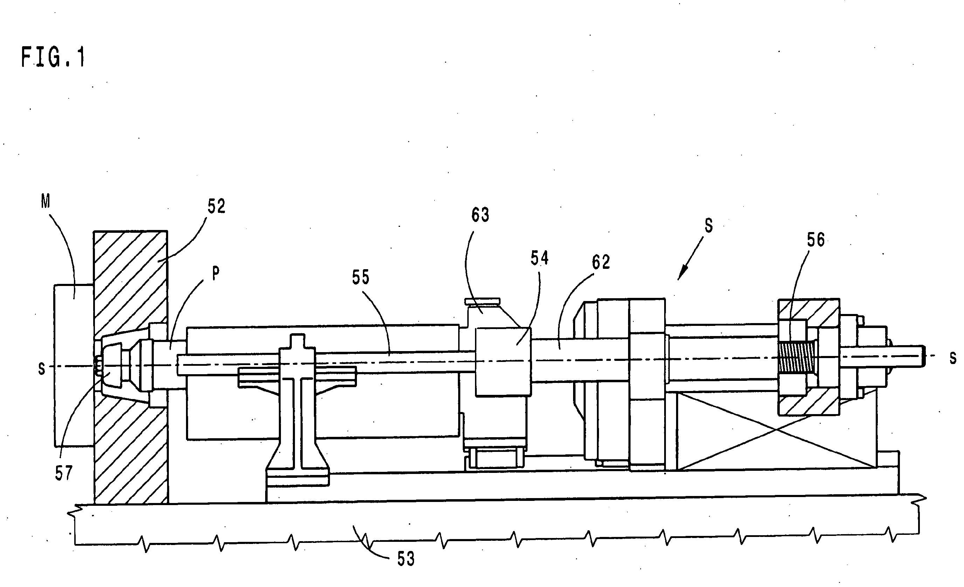

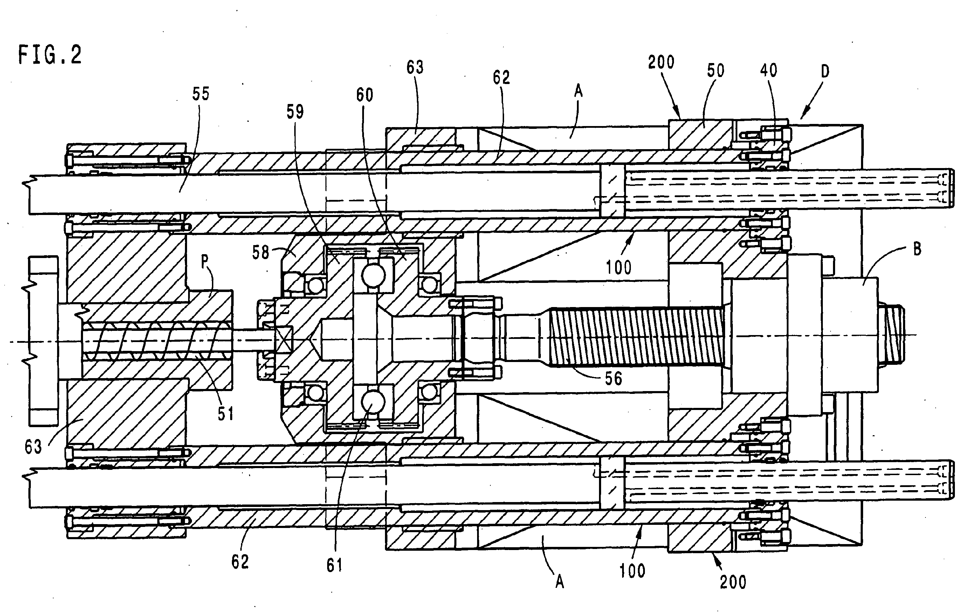

Gemäß den Figuren 1 und 2 wird bei der Verarbeitung der zu plastifizierenden Massen das Ausgangsmaterial dem Plastifizierzylinder P zugeführt, das in diesem plastifiziert wird und mittels eines Fördermittels 51 wie z.B. einer Förderschnecke entlang der Spritzachse s-s in den Formhohlraum eines Spritzgießwerkzeugs M zyklisch gefördert wird. An der Spritzgießeinheit S sind mehrere, dem Tragkörper 63 zugeordnete mechanische Antriebe A vorgesehen, die zum Anlegen der Düse 57 an den Formträger 52 bzw. das Werkzeug M mittels der Spindel 56 bzw. zum Rotieren des Fördermittels 51 oder zum axialen Bewegen des Fördermittels dienen. Dies erfolgt in bekannter Weise in zyklischen Bewegungen des mit dem Fördermittel 51 verbundenen Einspritzelements 58, indem zwei unabhängig voneinander drehbare Antriebselemente 59,60 zur Erzielung der Drehbewegung als auch der Axialbewegung der Förderschnecke von den mechanischen Antrieben A angetrieben werden. Mit diesen Antrieben wird direkt über das Antriebselement 60 die Spindel 56 angetrieben, die mit der stationären Spindelmutter B zusammenwirkt bzw. das Rotieren des Fördermittels 51 bewirkt. Auf den genauen Aufbau dieser Bauteile wird hier nicht näher eingegangen, da er aus dem Stand der Technik bekannt ist. Ebenso sind alternative Antriebsarten dem Fachmann bekannt.

Zwischen Einspritzbrücke 50 und Tragkörper 63 wird über die Rohre 62 ein Kraftrahmen gebildet ist, dem gemäß der Erfindung durch die Kraftwirkung zwischen Tragkörper 63 und Einspritzbrücke 50 die Funktion einer Krafterfassung und gleichzeitig einer Überlastsicherung zugewiesen wird, wie im Folgenden noch erläutert wird. Die Rohre 62 bilden gleichzeitig die Zylinder einer Kolben-Zylindereinheit, deren Kolbenstange durch Führungsholme 55 gebildet sind und die als hydraulische Einheit zum Anlegen der Düse 57 am Werkzeug M bzw. an der Spritzgießform dient.

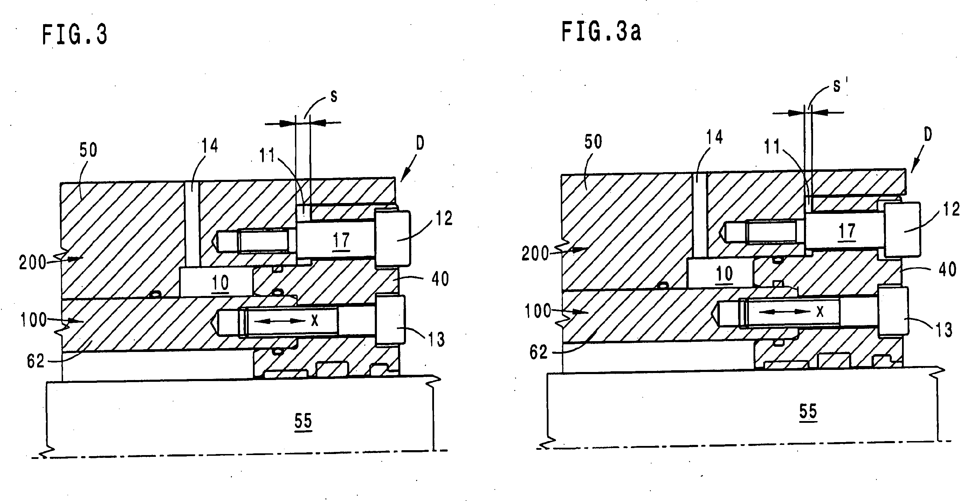

Kräfte zwischen Tragkörper 63 und Einspritzbrücke 50, gehalten über die Rohre 62, entstehen durch Drehen des Antriebselements 59 als Staudruck oder Drehen des Antriebselements 60 über Spindel 56 nämlich als Einspritzkraft. Vor allem bei diesen beiden Funktionen wird Spannung auf den Kraftrahmen aufgebracht, die sowohl bei Staudruckkräften, welche beim Bewegen bzw. Drehen des Fördermittels 52 entstehen, wie auch bei Einspritzkräften auf einen aus den Fig. 3 bis 4 ersichtlichen Hydraulikraum 10 wirken. Während des Einspritzvorgangs wirkt ferner eine Kraft, die einerseits über die Antriebselemente 59,60 sowie das Axiallager 61 und die Spindel 56 bis zur Einspritzbrücke 50 übertragen wird. Diese Kräfte sollen im Ausführungsbeispiel durch die Krafterfassungseinrichtung D erfasst werden.

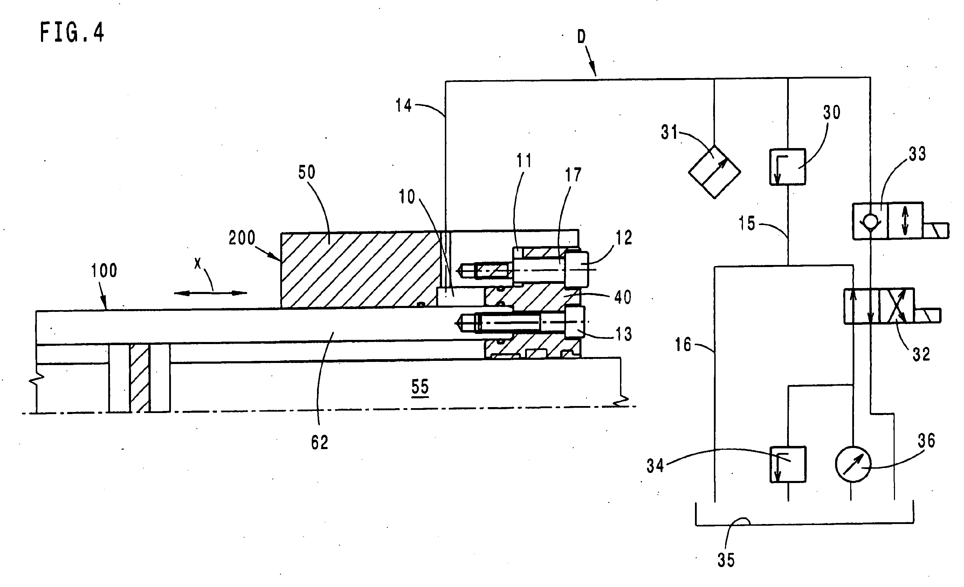

Die Figuren 3 und 4 zeigen einen vergrößerten Ausschnitt aus Fig. 2 im Bereich der Krafterfassungseinrichtung D. Die Vorrichtung detektiert eine Kraft, im Ausführungsbeispiel z. B. die Einspritzkraft. Dazu ist ein mit wenigstens einem mechanischen Antrieb A zusammenwirkendes und zumindest mittelbar von dem mechanischen Antrieb in einer Bewegungsrichtung x bewegtes erstes Bauteil 100 vorgesehen, das im Ausführungsbeispiel durch das Rohr 62 gebildet wird. Ergänzend dazu ist wenigstens ein sich bei dieser Bewegung relativ zu dem ersten Bauteil bewegendes weiteres Bauteil 200 vorgesehen, das dem ersten Bauteil 100 benachbart ist oder an das erste Bauteil angrenzt. Die Krafterfassungseinrichtung D zur Erfassung der auf das erste Bauteil 100 und/oder weitere Bauteil 200 infolge der Betätigung der Spritzgießmaschine einwirkenden Kraft ist mit beiden Bauteilen verbunden, sodass die Kraft durch Bestimmung der Relativbewegung zwischen dem ersten Bauteil 100 und dem weiteren Bauteil 200 bei der elastischen Dehnungsverformung der Bauteile bestimmt werden kann.

Zwischen dem ersten Bauteil 100 und dem weiteren Bauteil 200 ist dazu der Hydraulikraum 10 ausgebildet, dessen Größe sich bei der Relativbewegung unter Druckänderung des im Hydraulikraum befindlichen Hydraulkmediums ändert. Die dabei auftretende Druckänderung dient als Eingangssignal für eine Kraft- oder Druckregelung vorzugsweise des mechanischen Antriebs A. Beim üblichen Betrieb wird der Hydraulikraum 10 aus dem Hydraulikmittelbehälter 35 über eine Pumpe 36 mit einem Druck derart beaufschlagt, dass die Bauteile an einem mechanischen Anschlag anliegen, das heißt im Ausführungsbeispiel der Kraftrahmen (Einspritzbrücke 50, Rohre 62, Tragkörper 63) über das Hydraulikmedium im Hydraulikraum 10 geschlossen ist. Hierzu ist das Hydraulikmedium vorzugsweise zumindest zeitweise hydraulisch vorgespannt. Kommt es zu einer Relativbewegung zwischen dem ersten Bauteil 100 und dem zweiten Bauteil 200, das im Ausführungsbeispiel durch die Einspritzbrücke 50 gebildet ist, führt dies zu einer Druckänderung, die über den Druckaufnehmer 31 erfasst wird und zur Druck- oder Kraftregelung weiter verwendet wird. Wird jedoch ein durch ein Druckbegrenzungsventil 30 vorbestimmter oder vorbestimmbarer Druck im Hydraulikraum 10 überschritten, kann Hydraulikmedium über die Leitungen 15 und 16 in den Hydraulikmittelbehälter 30 abgelassen werden.

Der Hydraulikraum 10 wird durch das erste Bauteil 100 und das weitere Bauteil 200 sowie ein kolbenartiges Element 40 begrenzt, das zur Bildung des Hydraulikraums am ersten Bauteil 100 und/oder am weiteren Bauteil 200 dichtend gelagert ist. Im Betriebszustand bewegt sich das kolbenartige Element 40 als Kolben im Hydraulikraum 10, wobei die Einspritzbrücke 50 gleichzeitig als Zylinder dient. Das kolbenartige Element 40 ist insofern im Ausführungsbeispiel mit dem ersten Bauteil 100, also mit dem Rohr 62 fest verbunden, alternativ könnte es mit dem weiteren Bauteil 200 fest verbunden sein. Es bildet daher durch die Befestigung über das Befestigungsmittel 13 einen Teil des Bauteils 100.

Auf der anderen Seite ist das kolbenartige Element 40, das im Ausführungsbeispiel vorzugsweise ein den Führungsholm 55 umgebender Ringkolben ist, über das Befestigungsmittel 12 mit der Einspritzbrücke 50 verbunden, allerdings ist es gegenüber dieser Einspritzbrücke infolge der Distanzhülse 17 axial beweglich, wobei für die Bewegung ein Bewegungspufferraum 11 vorgesehen ist. In Fig. 3 hat dieser Bewegungspufferraum die axiale Erstreckung s, die im Regelfall bei normalem Betrieb aufrecht erhalten wird. Kommt es jetzt zum Überlastfall, z.B. durch ein Auflaufen des mechanischen Antriebs oder eines Bauteils der Spritzgießmaschine oder eines Werkzeugs an einem Endanschlag, führt dies zu einem unzulässigen Druckanstieg und als Folge davon zu einer Bewegung des weiteren Bauteils 200, also der Einspritzbrücke 50 in Fig. 3 nach rechts. Dadurch wird der Hydraulikraum 10 verkleinert, sodass der Druck den vorbestimmten oder vorbestimmbaren Grenzwert des Druckbegrenzungsventils 30 überschreitet und Hydraulikmedium abgelassen wird. Dies führt zur Ausnutzung des Bewegungspufferraums 11 gemäß Fig. 3a, wobei sich in Fig. 3a die axiale Erstreckung s' auf die Hälfte verringert hat.

Durch diese Überlastsicherung in Verbindung mit der gleichzeitig erfolgenden Krafterfassung kann der mechanische Antrieb A, welche Gestaltung er auch immer hat, vor der Überlast geschützt werden. Nach Eintreten dieses Überlastfalls hat das Hydrauliksystem die Aufgabe, das System wieder zurück zu stellen. Dies erfolgt dadurch, dass die Pumpe 36 über die Kreuzschaltung des Ventils 32 den ursprünglichen mechanischen Zustand wieder herstellt, nämlich die Rückstellung des Bewegungspufferraums 11 auf den Ausgangszustand, der durch den Anschlag des kolbenartigen Elements 40 am Befestigungsmittel 12 erreicht wird.

Für die Funktion der Druckmessung in Leitung 14 durch Druckaufnehmer 31 ist die weitere Hydraulik nicht notwendig. Es handelt sich um ein passives System. Die Hydraulik insgesamt wird jedoch vorzugsweise benötigt, um einen absolut gleichen Ausgangszustand für den Zyklusbeginn beim Messvorgang herzustellen.

Während des Messvorganges ist das Hydraulikmedium über Rückschlagventil 33 eingespannt. Mit Druckaufnehmer 31 wird Druck gemessen und mit Druckbegrenzungsventil 30 wird die Überlastsicherung hergestellt. Die Startbedingung für den weiteren bzw. nächsten Messvorgang wird hergestellt, indem über die Pumpe 36 und Ventil 32 über Rückschlagventil 33 über einen Begrenzungsdruck 34 das System in die Urstellung geht. Als letztes wird kurz das Ventil 32 geschaltet, damit ein absoluter Druckausgleich zu Null geschieht, welcher notwendig ist, damit die gesamte Messbreite von Kraft Null bis Maximalkraft ausgenutzt werden kann. Ohne diesen letzten Schritt, d.h. wenn mit einem bestimmten vorgespannten Druck gestartet wird, besteht die Gefahr, dass das System anfänglich nichts bis zum Erreichen der korrespondierenden Kraft im System spürt, welche dem eingespannten Druck entspricht. Die Funktion des Wiederherstellens der Grundfunktion nach jedem Zyklus ist auch sinnvoll, ohne dass die Überlastsicherung angesprochen hat, um absolut gleiche Voraussetzungen zu schaffen.

Als mechanischer Antrieb kommen alle Antriebe in Betracht, die in irgendeiner Weise eine mechanische Bewegung hervorrufen. Solche mechanischen Antriebe können alle Arten von Spindelantrieben, aber auch Linearmotoren oder servogesteuerte Antriebe sein. Denkbar ist ebenfalls eine mittels eines Hydraulikmotors angetriebene Spindel, da auch diese vor einem Überlastfall geschützt werden muss. Hinzu kommen die elektromechanischen Antriebe, aber auch eine Krafterfassung bei einem Kniehebel ist denkbar, wenn es insbesondere darum geht, die Kraft in Strecklage zu erfassen. Das System ist kostengünstig und bietet zudem den Vorteil, dass eine Auflösung des Hydraulikdrucks individuell durch eine entsprechende Auswahl der Größe der bei der Axialbewegung beaufschlagten Fläche des kolbenartigen Elements 40 möglich ist.

### Bezugszeichenliste

- 10: Hydraulikraum
- 11: Bewegungspufferraum
- 12,13: Befestigungsmittel
- 14,15,16: Leitung
- 17: Distanzhülse
- 30: Druckbegrenzungsventil
- 31: Druckaufnehmer
- 32: Ventil
- 33: Rückschlagventil
- 34: Begrenzungsdruck
- 35: Hydraulikmittelbehälter
- 36: Pumpe
- 40: kolbenartiges Element
- 50: Einspritzbrücke
- 51: Fördermittel
- 52: Formträger
- 53: Maschinenfuß
- 54: Spindelmutter
- 55: Holm
- 56: Spindel
- 57: Düse
- 58: Einspritzelement
- 59,60: Antriebselement
- 61: Axiallager
- 62: Rohr
- 63: Tragkörper
- 100: erstes Bauteil
- 200: weiteres Bauteil
- A: mechanischer Antrieb
- B: Spindelmutter
- D: Krafterfassungseinrichtung
- M: Werkzeug
- P: Plastifizierzylinder
- S: Spritzgießeinheit
- s: axiale Erstreckung
- X: Bewegungsrichtung
- s-s: Spritzachse

## Patentansprüche

1. Vorrichtung zum Detektieren einer Kraft an einer Spritzgießmaschine zur Verarbeitung von Kunststoffen und anderer plastifizierbarer Massen wie pulverförmigen und/oder keramische Massen
mit wenigstens einem mit dem wenigstens einen mechanischen Antrieb (A) zusammenwirkenden und zumindest mittelbar von dem mechanischen Antrieb in einer Bewegungsrichtung (x) bewegten ersten Bauteil (100), das sich bei dieser Bewegung relativ zu wenigstens einem dem ersten Bauteil (100) benachbarten oder an das erste Bauteil angrenzenden weiteren Bauteil (200) der Spritzgießmaschine bewegt, sowie
mit wenigstens einer Krafterfassungseinrichtung (D) zur Erfassung der auf das erste Bauteil (100) und/oder das weitere Bauteil (200) infolge einer Betätigung der Spritzgießmaschine einwirkenden Kraft als Folge der Relativbewegung zwischen dem ersten Bauteil (100) und dem weiteren Bauteil (200), wobei zwischen dem ersten Bauteil (100) und dem weiteren Bauteil (200) ein Hydraulikraum ausgebildet ist, dessen Größe sich bei der Relativbewegung unter Druckänderung eines im Hydraulikraum befindlichen Mediums ändert, wobei die Druckänderung ein Eingangssignal für eine Kraft- oder Druckregelung ist, **dadurch gekennzeichnet, dass** ein Druckbegrenzungsventil (30) zur Ableitung von Hydraulikmittel in den Hydraulikmittelbehälter (35) bei Überschreiten eines vorbestimmten oder vorbestimmbaren Drucks im Hydraulikraum (10) vorgesehen ist,
wobei der Hydraulikraum (10) durch das erste Bauteil (100) und das weitere Bauteil (200) sowie durch ein kolbenartiges Element (40) begrenzt ist, das zur Bildung des Hydraulikraums am ersten Bauteil und/oder am weiteren Bauteil (200) in den Hydraulikraum abdichtender Weise gelagert ist und bei Überschreiten des vorbestimmten oder vorbestimmbaren Drucks des Hydraulikmediums im Hydraulikraum (10) in Bewegungsrichtung (x) des ersten Bauteils (100) beweglich ist.

2. Vorrichtung nach Anspruch 1, **dadurch gekennzeichnet, dass** das kolbenartige Element (40) mit dem ersten Bauteil (100) oder mit dem weiteren Bauteil (200) zur Bildung eines Teil desselben fest verbindbar ist.

3. Vorrichtung nach Anspruch 1 oder 2, **dadurch gekennzeichnet, dass** das Hydraulikmedium im Hydraulikraum (10) hydraulisch vorgespannt ist.

4. Vorrichtung nach einem der vorhergehenden Ansprüche, **dadurch gekennzeichnet, dass** das Antriebselement (B) ein Linearbewegungselement oder ein mit dem Linearbewegungselement in unmittelbarer Verbindung stehendes Bauteil eines Linearantriebs oder eines Spindelantriebs ist oder dass das Antriebselement ein Kniehebel eines Kniehebelantriebs ist.

5. Vorrichtung nach einem der vorhergehenden Ansprüche, **dadurch gekennzeichnet, dass** die Erfassung der auf das erste Bauteil (100) und/oder das weitere Bauteil (200) infolge der Betätigung der Spritzgießmaschine einwirkenden Kraft als Folge der Relativbewegung zwischen dem ersten Bauteil (100) und dem weiteren Bauteil (200) bei Dehnungsverformung der Bauteile erfolgt.

6. Vorrichtung nach einem der vorhergehenden Ansprüche, **dadurch gekennzeichnet, dass** das weitere Bauteil (200) eine Einspritzbrücke (50) für ein Förderelement (51) der Spritzgießmaschine ist.

7. Verfahren zum Detektieren einer Kraft an einer Spritzgießmaschine zur Verarbeitung von Kunststoffen und anderer plastifizierbarer Massen wie pulverförmige und/oder keramische Massen mit den Schritten:
- Bewegen mindestens eines ersten Bauteils (100) mittels wenigstens eines mechanischen Antriebs (A,B) in einer Bewegungsrichtung (x) unter Relativbewegung zu wenigstens einem dem ersten Bauteil (100) benachbarten oder an das erste Bauteil angrenzenden weiteren Bauteil (200) der Spritzgießmaschine,
- Erfassen der auf das erste Bauteil und/oder das weitere Bauteil einwirkenden Kraft als Folge der Relativbewegung zwischen dem ersten Bauteil (100) und dem weiteren Bauteil (200) durch Ausbilden eines Hydraulikraums (10) zwischen dem ersten Bauteil (100) und dem weiteren Bauteil (200) und Bestimmen der Druckänderung eines im Hydraulikraum (10) befindlichen Hydraulikmediums während der Relativbewegung,
- Verwenden der ermittelten Druckänderung als Eingangssignal für eine Druck- oder Kraftregelung,
**gekennzeichnet durch** das Begrenzen des Drucks im Hydraulikraum (10) auf einen vorgegebenen oder vorgebbaren Druck und Ablassen von Hydraulikmedium aus dem Hydraulikraum (10) bei Überschreiten des vorgegebenen oder vorgebbaren Drucks **durch** Lagern eines den Hydraulikraum begrenzenden kolbenartigen Elements (40) am ersten Bauteil (100) und/oder am weiteren Bauteil (200) in den Hydraulikraum abdichtender Weise, so dass es bei Überschreiten des vorbestimmten oder vorbestimmbaren Drucks des Hydraulikmediums im Hydraulikraum (10) in Bewegungsrichtung (x) des ersten Bauteils (100) beweglich ist.

8. Verfahren nach Anspruch 7, **gekennzeichnet durch** das Ablassen von Hydraulikmedium aus dem Hydraulikraum (10) unter Freisetzen eines begrenzten Bewegungspufferraums (11) des ersten Bauteils (100) und des weiteren Bauteils (200) relativ zueinander.

9. Verfahren nach Anspruch 7 oder 8, **gekennzeichnet durch** das zyklische Kalibrieren des Drucks im Hydraulikraum (10) auf einen Ausgangswert und/oder durch das hydraulische Zurücksetzen eines der Bauteile (100, 200) in seinen Ausgangszustand nach der vorzugsweise zyklisch erfolgenden Krafterfassung.

10. Verfahren nach einem der Ansprüche 7 bis 9, **dadurch gekennzeichnet, dass** als mechanischer Antrieb (A) ein Spindelantrieb, ein Linearantrieb, eine Spindel mit Hydraulikantrieb oder ein Kniehebelantrieb verwendet wird.

11. Verfahren nach einem der Ansprüche 7 bis 10, **dadurch gekennzeichnet, dass** das Eingangssignal zur Druck- oder Kraftregelung des mechanischen Antriebs (A) verwendet wird.

12. Verfahren nach einem der Ansprüche 7 bis 11, **dadurch gekennzeichnet, dass** die auf das erste Bauteil und/oder das weitere Bauteil einwirkende Kraft als Folge der Relativbewegung zwischen dem ersten Bauteil (100) und dem weiteren Bauteil (200) unter Dehnungsverformung der Bauteile erfasst wird.

## Claims

1. Device for detecting a force on an injection moulding machine for processing plastics materials and other plasticisable compounds such as pulverent and/or ceramic compounds,
the device including at least one first component (100), which interacts with the at least one mechanical drive (A), is displaced at least indirectly by the mechanical drive in a direction of displacement (x) and is displaced during the displacement relatively to at least one additional component (200) of the injection moulding machine, the additional component being adjacent the first component (100) or abutting against the first component,
as well as including at least one force detecting device (D) for detecting the force acting on the first component (100) and/or on the additional component (200) due to an activation of the injection moulding machine as a result of the relative displacement between the first component (100) and the additional component (200),
wherein a hydraulic chamber is formed between the first component (100) and the additional component (200), the size of the hydraulic chamber changing during the relative displacement by means of a change in the pressure of a medium situated in the hydraulic chamber, wherein the change in pressure is an input signal for controlling a force or pressure,
**characterised in that** a pressure-relief valve (30) is provided for diverting hydraulic medium into the hydraulic medium container (35) when a predetermined or predeterminable pressure is exceeded in the hydraulic chamber (10),
wherein the hydraulic chamber (10) is defined by the first component (100) and the additional component (200) as well as by a piston-type element (40), which is mounted on the first component and/or on the additional component (200) in a manner sealing the hydraulic chamber in order to form the hydraulic chamber and wherein the piston-type element (40) is displaceable in the direction of displacement (x) of the first component (100) if a predetermined or predeterminable pressure of the hydraulic medium is exceeded in the hydraulic chamber (10).

2. Device according to claim 1, **characterised in that** the piston-type element (40) is fixedly connectable to the first component (100) or to the additional component (200) to form a part of the same.

3. Device according to claims 1 or 2, **characterised in that** the hydraulic medium in the hydraulic chamber (10) is hydraulically pre-stressed

4. Device according to one of the preceding claims, **characterised in that** the drive element (B) is a linear displacement element or a component of a linear drive or a spindle drive that is directly connected to the linear displacement element or **in that** the drive element is a toggle lever of a toggle drive.

5. Device according to one of the preceding claims, **characterised in that** the detecting of the force working on the first component (100) and/or on the additional component (200) due to the activation of the injection moulding machine is effected as a result of the relative displacement between the first component (100) and the additional component (200) with the components deforming in an elongated manner.

6. Device according to one of the preceding claims, **characterised in that** the additional component (200) is an injection bridge (50) for a feeding element (51) of the injection moulding machine.

7. Method for detecting a force on an injection moulding machine for processing plastics materials and other plasticisable compounds such as pulverent and/or ceramic compounds, the said method including the steps:
- displacing at least one first component (100) by means of at least one mechanical drive (A, B) in a direction of displacement (x) with displacement relative to at least one additional component (200) of the injection moulding unit, the additional component being adjacent the first component (100) or abutting against the first component (200),
- detecting the force acting on the first component and/or on the additional component as a result of the relative displacement between the first component (100) and the additional component (200) in forming a hydraulic chamber (10) between the first component (100) and the additional component (200) and determining the change in pressure of a hydraulic medium situated in the hydraulic chamber (10) during the relative displacement;
- using the determined change in pressure as an input signal for controlling the pressure or force,
**characterized by** limiting the pressure in the hydraulic chamber (10) to a predetermined or predeterminable pressure and discharging the hydraulic medium out of the hydraulic chamber (10) if the predetermined or predeterminable pressure is exceeded, in mounting a piston-type element (40) defining the hydraulic chamber on the first component (100) and/or the additional component (200) in a manner sealing the hydraulic chamber such that the piston-type element (40) is displaceable in the direction of displacement (x) of the first component (100) if a predetermined or predeterminable pressure of the hydraulic medium is exceeded in the hydraulic chamber (10).

8. Method according to claim 7, **characterised by** the discharging of hydraulic medium out of the hydraulic chamber (10) by opening a defined displacement buffer space (11) of the first component (100) and of the additional component (200) relative to each other.

9. Method according to claim 7 or 8, **characterised by** the cyclical calibration of the pressure in the hydraulic chamber (10) to an initial value and/or by hydraulically resetting one of the components (100, 200) into its initial state after detecting the force in a preferably cyclical manner.

10. Method according to one of claims 7 to 9, **characterised in that** a spindle drive, a linear drive, a spindle with hydraulic drive or a toggle drive is used as the mechanical drive (A).

11. Method according to one of claims 7 to 10, **characterised in that** the input signal is used for controlling the pressure or force of the mechanical drive (A).

12. Method according to one of claims 7 to 11, **characterised in that** the force acting on the first component and/or on the additional component is detected as a result of the relative displacement between the first component (100) and the additional component (200) by the components deforming in an elongated manner.

## Revendications

1. Dispositif pour détecter une force sur une machine de moulage par injection pour la transformation de matières plastiques et d'autres masses plastifiables comme des masses pulvérulentes et/ou céramiques comportant
au moins un premier élément de bâti (100) coopérant avec au moins un entraînement mécanique (A) et au moins indirectement déplacé dans une direction de déplacement (x) par l'entraînement mécanique, l'élément de bâti se déplaçant lors de ce déplacement relativement à au moins un élément de bâti supplémentaire (200) de la machine de moulage par injection adjacent à, ou prolongeant le premier bâti (100), ainsi que
au moins un appareil de mesure de force (D) pour la mesure de la force agissant sur le premier élément de bâti (100) et/ou l'élément de bâti supplémentaire (200) suite à l'actionnement de la machine de moulage par injection et due au déplacement relatif entre le premier élément de bâti (100) et l'élément de bâti supplémentaire (200), un espace hydraulique étant formé entre le premier élément de bâti (100) et l'élément de bâti supplémentaire (200), dont la dimension varie lors du déplacement relatif sous l'effet de la variation de pression d'un milieu se trouvant dans l'espace hydraulique, la variation de pression étant un signal d'entrée pour un réglage de la force ou de la pression, **caractérisé en ce qu'**une soupape de limitation de pression (30) est prévue pour évacuer le milieu hydraulique dans le conteneur de milieu hydraulique (35) lors du dépassement d'une pression prédéterminée ou prédéterminable dans l'espace hydraulique (10),
l'espace hydraulique (10) étant limité par le premier élément de bâti (100) et l'élément de bâti supplémentaire (200) ainsi que par un élément en forme de piston (40), qui est logé dans l'espace hydraulique de manière étanche pour former l'espace hydraulique dans le premier élément de bâti et/ou dans l'élément de bâti supplémentaire et est déplaçable dans la direction de déplacement (x) du premier élément de bâti (100) lors du dépassement de la pression prédéterminée ou prédéterminable du milieu hydraulique dans l'espace hydraulique (10).

2. Dispositif selon la revendication 1, **caractérisé en ce que** l'élément en forme de piston (40) est relié fermement avec le premier élément de bâti (100) ou avec l'élément de bâti supplémentaire (200) pour en former une partie.

3. Dispositif selon la revendication 1 ou 2, **caractérisé en ce que** le milieu hydraulique est précomprimé hydrauliquement dans l'espace hydraulique (10).

4. Dispositif selon l'une des revendications précédentes, **caractérisé en ce que** l'élément d'entraînement (B) est un élément de déplacement rectiligne ou un élément constitutif d'un entraînement rectiligne ou à broche, en liaison directe avec l'élément de déplacement rectiligne ou **en ce que** l'élément d'entraînement est une genouillère d'un entraînement à genouillère.

5. Dispositif selon l'une des revendications précédentes, **caractérisé en ce que** la mesure de la force agissant sur le premier élément de bâti (100) et/ou sur l'élément de bâti supplémentaire (200) suite à l'actionnement de la machine de moulage par injection et due au déplacement relatif entre le premier élément de bâti (100) et l'élément de bâti supplémentaire (200) s'effectue par déformation d'allongement des éléments de bâti.

6. Dispositif selon l'une des revendications précédentes, **caractérisé en ce que** l'élément de bâti supplémentaire (200) est un pont d'injection (50) pour un élément de convoyage (51) de la machine de moulage par injection.

7. Procédé de détection d'une force sur une machine de moulage par injection pour le travail de matières plastiques et d'autres masses plastifiables comme des masses pulvérulentes et/ou céramiques, comportant les étapes de :
- déplacement d'au moins un élément de bâti (100) au moyen d'un entraînement mécanique (A, B) dans une direction de déplacement (x) par déplacement relatif par rapport à au moins un élément de bâti supplémentaire (200) de la machine de moulage par injection adjacent à, ou prolongeant le premier élément de bâti (100),
- mesure de la force agissant sur le premier élément de bâti et/ou l'élément de bâti supplémentaire suite au déplacement relatif entre le premier élément de bâti (100) et l'élément de bâti supplémentaire (200) par formation d'un espace hydraulique (10) entre le premier élément de bâti (100) et l'élément de bâti supplémentaire (200) et détermination de la variation de pression d'un milieu hydraulique se trouvant dans l'espace hydraulique (10) durant le déplacement relatif,
- utilisation de la variation de pression mesurée comme signal d'entrée pour un réglage de la pression ou de la force,
**caractérisé par** la limitation de la pression dans l'espace hydraulique (10) à une pression prédéterminée ou prédéterminable et l'évacuation du milieu hydraulique hors de l'espace hydraulique (10) lors du dépassement de la pression prédéterminée ou prédéterminable, par logement, dans le premier élément de bâti (100) et/ou l'élément de bâti supplémentaire (200), dans l'espace hydraulique, de façon étanche, d'un élément en forme de piston (40) limitant l'espace hydraulique, de sorte qu'il soit déplaçable dans la direction de déplacement (x) du premier élément de bâti (100), lors du dépassement de la pression prédéterminée ou prédéterminable du milieu hydraulique dans l'espace hydraulique (10).

8. Procédé selon la revendication 7, **caractérisé par** l'évacuation du milieu hydraulique hors de l'espace hydraulique (10) lors de la libération d'un espace tampon de déplacement (11) limité du premier élément de bâti (100) par rapport à l'élément de bâti supplémentaire (200).

9. Procédé selon la revendication 7 ou 8, **caractérisé par** le calibrage cyclique de la pression dans l'espace hydraulique (10) sur une valeur de départ et/ou par la remise hydraulique d'un des éléments de bâti (100, 200) dans son état de départ, après la mesure de force s'effectuant de préférence de manière cyclique.

10. Procédé selon l'une des revendications 7 à 9, **caractérisé en ce qu'**on utilise comme entraînement mécanique (A) un entraînement à broche, un entraînement rectiligne, une broche avec un entraînement hydraulique ou un entraînement à genouillère.

11. Procédé selon l'une des revendications 7 à 10, **caractérisé en ce que** le signal d'entrée est utilisé pour un réglage de la pression ou de la force de l'entraînement mécanique (A).

12. Procédé selon l'une des revendications 7 à 11, **caractérisé en ce qu'**on mesure la force agissant sur le premier élément de bâti et/ou l'élément de bâti supplémentaire suite au déplacement relatif entre le premier élément de bâti (100) et l'élément de bâti supplémentaire (200) par la déformation d'allongement des éléments de bâti.
